Europäisches Patentamt

European Patent Office (11) Numéro de publication : **0 148 807**

Office européen des brevets **B1**

(12) **FASCICULE DE BREVET EUROPÉEN**

(45) Date de publication du fascicule du brevet :
07.03.90

(51) Int. Cl.⁵ : **F 16 L 58/18, F 16 L 15/00, E 21 B 17/00, B 65 D 59/00**

(21) Numéro de dépôt : 85420003.7

(22) Date de dépôt : 07.01.85

(54) **Dispositif protecteur pour filetages et portées de joint formant butée de tubes métalliques.**

(30) Priorité : 09.01.84 FR 8400700
20.12.84 FR 8419850

(43) Date de publication de la demande :
17.07.85 Bulletin 85/29

(45) Mention de la délivrance du brevet :
07.03.90 Bulletin 90/10

(84) Etats contractants désignés :
AT BE DE GB IT NL SE

(56) Documents cités :
DE—A— 2 715 837
DE—U— 7 800 484
FR—A— 872 393
FR—A— 1 187 881
FR—A— 1 489 013
FR—A— 2 215 363
GB—A— 380 450
GB—A— 2 093 426
US—A— 2 239 942
US—A— 2 258 066
US—A— 2 930 118
US—A— 4 157 100

(73) Titulaire : **VALLOUREC**
**130, rue de Silly**
**F-92100 Boulogne-Billancourt (FR)**

(72) Inventeur : **Depret, Jean-Paul**
**7 rue Ampère**
**F-59620 Aulnoye Aymeries (FR)**

(74) Mandataire : **Desoineux, Jean-Paul Charles**
**130 rue de Silly BP 413**
**F-92103 Boulogne-Billancourt Cédex (FR)**

Jouve, 18, rue St-Denis, 75001 Paris, France

## Description

Le dispositif qui fait l'objet de l'invention concerne la protection avant utilisation des filetages et des portées de joint formant butée qui permettent la réalisation des jonctions vissées de tubes métalliques de révolution et participent à l'étanchéité de ces jonctions. Ce dispositif concerne les jonctions vissées de tubes métalliques reliés soit de façon directe les uns aux autres, soit par l'intermédiaire de raccords filetés ou manchons.

Ce dispositif concerne en particulier la protection des portées de joint formant butée et des filetages des tubes utilisés pour le forage des puits de pétrole, ou pour l'exploitation (tubing) de ces puits, ou encore pour les cuvelages de ces puits (casing).

Parmi les différents types de jonctions vissées qui ont été développés on connaît en particulier celui décrit dans le brevet FR-A-1489013. La portée de joint formant butée qui doit assurer l'étanchéité de la jonction comporte une surface annulaire tronconique concave, usinée à l'extrémité mâle d'un tube, qui vient en butée contre une surface annulaire tronconique convexe usinée au voisinage de l'extrémité intérieure du filetage femelle.

L'étanchéité de la jonction dépend de la qualité des filetages et des portées de joint formant butée, qualité qui peut être détériorée soit par des chocs, au cours des transports par exemple, soit par corrosion, en particulier au contact d'eau salée ou d'autres milieux agressifs.

Différents dispositifs ont été proposés en vue de protéger les zones de jonction de tubes vissés.

La demande de brevet DE-A-2834489 décrit une coiffe de protection en élastomère ou en matière plastique qui recouvre le filetage extérieur d'un tube. Des reliefs intérieurs, sensiblement parallèles à l'axe, assurent la tenue de la coiffe sur les filets. Le dispositif peut aussi être adapté à la protection d'un filetage intérieur.

Ce dispositif n'est pas conçu pour la protection de portées de joint et, n'étant pas étanche, ne protège pas contre la corrosion.

Le modèle d'utilité DE-U-7800484 décrit un protecteur pour filetages tronconiques mâles ou femelles aux extrémités de tubes d'acier, comportant une pièce en matière souple, telle qu'un élastomère, à laquelle est liée une pièce de renfort tubulaire en acier. La pièce en matière souple est pourvue d'un filetage tronconique qui épouse les filets du tube d'acier et comporte deux zones d'étanchéité dont l'une s'applique sur l'extrémité frontale du tube.

Un tel dispositif ne permet pas de protéger efficacement des portées de joint formant butée, telles que par exemple les portées tronconiques décrites dans le FR 1489013. Il est en effet difficile de visser correctement des filets en matière souple et la mise en appui étanche du joint sur les zones de butée est difficile à contrôler. Enfin la souplesse de la matière fait que son rôle protecteur vis à vis des chocs dans les zones non recouvertes par la pièce de renfort est faible.

La demande de brevet GB-A-2093426 décrit une coiffe de protection pour filetage extérieur de tube. Elle comporte une gaine extérieure de préférence en acier et une paroi intérieure de préférence en matière plastique résistant au choc. La paroi intérieure est filetée de façon à se visser sur l'extrémité du tube. Le bord d'extrémité du tube est protégé par un rebord arrondi de la coiffe qui le recouvre.

Ce dispositif n'est pas conçu pour protéger de la corrosion des portées de joint formant butée telles que des portées tronconiques. Il ne comporte pas non plus de moyens permettant d'assurer la protection contre la corrosion de la zone recouverte par la coiffe. Enfin il ne s'applique pas à la protection des filetages intérieurs des tubes.

On a recherché la possibilité de réaliser un dispositif pouvant assurer une protection efficace contre la corrosion et les chocs, avant utilisation, des filetages et des portées de joint formant butée, qui permettent la réalisation des jonctions vissées de tubes métalliques. On a recherché en particulier la possibilité de protéger les filetages intérieurs ou extérieurs et les portées de joint formant butée, tels que ceux décrits par exemple dans le brevet FR 1489013.

On a recherché aussi la possibilité de maintenir au contact des portées de joint formant butée un certain volume d'un fluide protecteur.

Enfin on a recherché la possibilité de réaliser un dispositif protecteur facile à monter et démonter, résistant aux chocs et vibrations, et permettant si nécessaire le libre passage à l'intérieur du tube métallique d'outils ou de calibres, sans démontage.

Le dispositif protecteur pour jonctions vissées mâles ou femelles de tubes métalliques qui fait l'objet de l'invention permet de résoudre ce problème de façon particulièrement simple et avantageuse. Ce dispositif concerne la protection des filetages et des portées de joint formant butée de tubes métalliques et en particulier des portées de joint formant butée à surfaces tronconiques décrites dans le FR-A-1489013.

Dans le cas de jonctions vissées mâles le dispositif protecteur selon l'invention, qui est monté sur l'extrémité d'un tube métallique avant son utilisation ledit tube comportant à une extrémité un filetage extérieur mâle se terminant par une portée située en amont du filetage lorsque l'on entre dans le tube, le filetage extérieur mâle et la portée de ce tube métallique étant destinés en service à s'engager dans des filetages intérieur femelle et portée correspondants prévus à l'extrémité d'un autre tube métallique afin de constituer une jonction vissée entre les deux tubes métalliques, les filetages et portées situés sur les deux tubes métalliques participant à l'étanchéité de la jonction vissée et les portées formant butée de vissage, comprend une bague en matière plastique rigide qui est vissable sur le filetage extérieur mâle du tube métallique recouvrant ainsi ledit filetage, la bague comportant un filetage comprenant au moins quelques filets, au moyen desquels elle peut être vissée sur le filetage extérieur mâle du tube métallique. Cette bague comporte une zone annulaire de butée dont la face frontale est disposée, de façon à se trouver en regard de la portée de joint du tube métallique, lorsque la bague est vissée à fond sur le tube. Le bord intérieur de cette face frontale comporte un premier moyen d'étanchéité annulaire qui coopère avec la portée de joint du tube, au voisinage de son bord intérieur pour assurer l'étanchéité. Le profil de cette face frontale est réalisé en tenant compte du profil de la portée de joint du tube de façon à délimiter un volume annulaire, compris entre cette face frontale et la portée de joint, qui est clos grâce à l'appui étanche obtenu au voisinage des bords intérieurs de cette face frontale et de cette portée de joint.

Dans le cas de jonctions vissées femelles, le dispositif protecteur selon l'invention, qui est monté sur l'extrémité d'un tube métallique avant son utilisation, ledit tube comportant à une extrémité un filetage intérieur femelle se terminant par une portée située en aval du filetage lorsque l'on entre dans le tube, le filetage intérieur femelle et la portée de ce tube métallique étant destinés en service à s'engager dans les filetages extérieurs mâle et portée correspondants prévus à l'extrémité d'un autre tube métallique afin de constituer une jonction vissée entre les deux tubes métalliques, les filetages et portées situés sur les deux tubes métalliques participant à l'étanchéité de la jonction vissée et les portées formant butée de vissage, comprend une bague en matière plastique rigide qui est vissable dans le filetage intérieur femelle du tube métallique recouvrant ainsi ledit filetage, la bague comportant un filetage comprenant au moins quelques filets, au moyen desquels elle peut être vissée sur le filetage intérieur femelle du tube métallique. Cette bague comporte une zone annulaire de butée dont la face frontale est disposée, de façon à se trouver en regard de la portée de joint du tube métallique, lorsque la bague est vissée à fond sur le tube. Le bord intérieur de cette face frontale comporte un premier moyen d'étanchéité annulaire qui coopère avec la portée de joint du tube, au voisinage de son bord intérieur, pour assurer l'étanchéité. Le profil de cette face frontale est réalisé en tenant compte du profil de la portée de joint du tube de façon à délimiter un volume annulaire, compris entre cette face frontale et la portée de joint, qui est clos grâce à l'appui étanche obtenu au voisinage des bords intérieurs de cette face frontale et de cette portée de joint.

Avantageusement le volume annulaire clos est rempli, au moins en partie, d'un fluide tel qu'une graisse qui protège la portée de joint, notamment contre la corrosion.

La bague, tant dans le cas des jonctions vissées mâles que femelles, peut comporter un deuxième moyen d'étanchéité annulaire dont l'action se combine avec celle du premier. Ce deuxième moyen est disposé de façon à se trouver en appui étanche contre le tube métallique, lorsque la bague est vissée à fond, au voisinage de l'une des extrémités de son filetage, la portée de joint formant butée se trouvant au voisinage de l'autre extrémité de ce même filetage. Le premier moyen d'étanchéité annulaire est avantageusement une lèvre formée par le bord intérieur de la face frontale de la bague. Le deuxième moyen d'étanchéité peut être également une lèvre annulaire, solidaire de la bague et dont le profil est tel qu'elle est en contact étanche avec la paroi du tube lorsque la bague est vissée à fond. Ce deuxième moyen d'étanchéité peut aussi être un joint rapporté, tel qu'un joint torique placé par exemple dans un logement annulaire ménagé dans la bague.

Avantageusement aussi la bague, tant dans le cas des jonctions vissées mâles que femelles, comporte une zone arrière qui dépasse l'extrémité du tube lorsqu'elle est vissée à fond. Cette zone peut comporter des moyens de prise tels que des reliefs qui facilitent la prise d'outils de vissage ou dévissage. Ces reliefs, de préférence parallèles à l'axe, sont disposés sur la paroi intérieure et/ou extérieure de la bague.

Afin de renforcer la tenue aux chocs de la bague, tant dans le cas des jonctions vissées mâles que femelles, on peut revêtir la majeure partie de la surface de celle-ci, du côté non fileté, d'une virole métallique qui est solidarisée avec elle par tout moyen convenable. Cette virole peut s'étendre au-delà de l'extrémité de la bague en matière plastique dans la direction qui s'éloigne du tube métallique. C'est alors cette virole qui peut être conformée de façon à comporter une zone munie de moyens de prise tels que des reliefs facilitant la prise d'outils de vissage ou dévissage.

Le diamètre intérieur de la bague en matière plastique, revêtue ou non d'une virole métallique est tel qu'il permet le libre passage d'outils ou de calibres sans dévissage du dispositif protecteur. Au contraire, pour certaines applications, le dispositif protecteur peut être fermé par un fond circulaire étanche solidaire de la bague en matière plastique ou de la virole dont elle peut être revêtue. Ce fond circulaire peut être amovible.

On utilise avantageusement pour la réalisation de la bague une matière plastique ayant de bonnes caractéristiques de dureté et d'élasticité telle qu'une matière à base de polyuréthane. Avantageusement, en particulier lorsque la bague n'est pas revêtue d'une virole métallique, on utilise une matière plastique présentant en outre une très bonne résistance aux chocs, en particulier à basse température. On peut faire appel par exemple à des polyamides modifiés pour une résistance accrue aux chocs ou à certaines qualités de polyéthylène.

La virole métallique dont peut être revêtue la bague est réalisée en un métal ou alliage approprié, tel que par exemple un acier ordinaire, allié, ou inoxydable.

Le dispositif suivant l'invention convient, plus particulièrement, pour la protection des zones de jonction de tubes métalliques comportant des filetages mâles ou femelles tronconiques. La bague comporte alors des filetages correspondants limités, de préférence, à quelques filets. On facilite ainsi le centrage de la bague avant vissage, on évite le coincement par superposition de filets et enfin on réduit les temps de vissage et dévissage. Enfin l'invention concerne aussi la bague en matière plastique en elle-même, revêtue ou non d'une virole métallique, qui permet de réaliser le dispositif suivant l'invention.

La description et les figures ci-après permettent de mieux comprendre, de façon non limitative, les principales caractéristiques du dispositif protecteur suivant l'invention, ainsi que les caractéristiques complémentaires avantageuses de certains modes particuliers de réalisation de ce dispositif.

La figure 1 est une vue, en demi-coupe axiale, d'un dispositif protecteur suivant l'invention, comportant une bague en matière plastique vissée à l'extrémité mâle d'un tube métallique.

La figure 2 est une vue agrandie de la figure (1) montrant la disposition du deuxième moyen d'étanchéité dont est pourvue la bague en matière plastique.

La figure 3 est une vue en demi-coupe axiale d'un dispositif protecteur suivant l'invention, comportant une bague en matière plastique vissée à l'extrémité femelle d'un tube métallique.

La figure 4 est une vue en demi-coupe axiale d'un dispositif protecteur suivant l'invention, comportant une bague en matière plastique, revêtue d'une virole métallique, vissée à l'extrémité mâle d'un tube métallique.

La figure 5 est une vue en demi-coupe axiale d'un dispositif protecteur suivant l'invention, comportant une bague en matière plastique, revêtue d'une virole métallique, vissée à l'extrémité femelle d'un tube métallique.

La figure 6 est une vue en bout, suivant la flèche F, de la partie dépassante de la virole métallique de la figure 5.

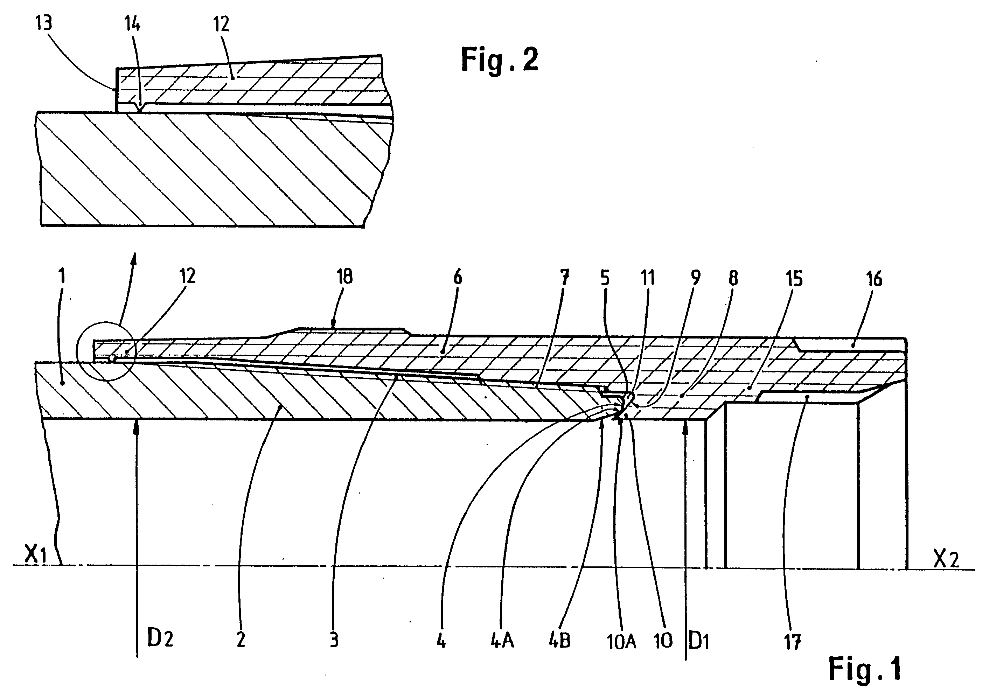

On voit à la figure 1, en demi-coupe axiale, un tube métallique de révolution (1) d'axe $(X_1-X_2)$, dont la zone de jonction mâle (2) est protégée par un dispositif suivant l'invention. Cette zone de jonction comporte un filetage tronconique extérieur (3) et une portée de joint (4) tronconique concave formant butée dont la génératrice est inclinée d'environ 15 à 25° par rapport à un plan perpendiculaire à $(X_1-X_2)$. La portée (4) est raccordée à l'extrémité du filetage (3) par un chanfrein (5).

Le dispositif protecteur comprend une bague monobloc (6) en matière plastique munie d'un filetage intérieur (7) comportant seulement quelques filets, qui est vissée à fond sur le filetage (3) du tube jusqu'à serrage en butée. La zone de butée (8) de la bague comporte une zone frontale (9) annulaire en regard de la portée de joint (4). Le bord intérieur de cette face frontale comporte un premier moyen d'étanchéité annulaire, constitué par la lèvre (10) qui, grâce au serrage de la bague sur le tube, se trouve en appui étanche sur la portée de joint, au voisinage du bord intérieur (4A) de cette portée. On remarque que, dans le mode de réalisation du dispositif suivant l'invention représenté à cette figure 1, la lèvre annulaire (10) orientée en direction de l'intérieur du tube est engagée à l'intérieur du cercle formé par le bord intérieur (4A) de la portée (4). Ainsi le bord extérieur (10A) de la lèvre (10) est en regard de la paroi intérieure du tube (1) dans sa zone de raccordement (4B) au bord intérieur (4A) de la portée de joint (4) lorsque la bague est vissée à fond. Dans ces conditions le bord intérieur (4A) est en appui contre la face frontale (9) dans la zone de raccordement entre le bord extérieur (10A) de la lèvre (10) et la partie de la face frontale qui est en regard de la portée de joint (4). Entre cette face frontale et cette portée de joint un volume annulaire clos (11) est réservé. Ce volume, de section sensiblement triangulaire dans le cas de la figure, est de préférence rempli d'un fluide protecteur tel qu'une graisse. On remarque que, grâce à la disposition particulière de la lèvre (10) représentée sur la figure, la portée de joint (4) est protégée par le fluide protecteur contenu dans le volume annulaire clos (11), sur toute sa surface. De plus l'avancée de la lèvre (10), dans une direction sensiblement parallèle à l'axe, vers l'intérieur du tube, forme, une sorte de labyrinthe qui limite les pertes de fluide protecteur dans le cas où une perte d'étanchéité se produit au niveau du contact entre le bord intérieur (4A) de la portée (4) et la face frontale (9) de la zone de butée (8) de la bague (6).

Afin d'améliorer l'étanchéité de cet espace clos, et aussi de protéger la zone du filetage, la bague peut comporter un deuxième moyen d'étanchéité situé au delà de la zone du filetage (3) par rapport à la portée de joint (4). Ce deuxième moyen est représenté de façon agrandie par la figure 2 qui est un détail de la figure 1. Elle montre la zone d'introduction (12) de la bague (6) autour du tube (1). On voit que, au voisinage du bord d'introduction (13) de la bague (6) est disposée une lèvre (14) orientée radialement en direction de l'axe $(X_1-X_2)$ qui prend appui sur la paroi extérieure du tube. Cette lèvre constitue le deuxième moyen d'étanchéité. Ses dimensions sont telles que, lorsque la bague est vissée à fond, elle se trouve en appui élastique étanche sur la paroi extérieure du tube. Ainsi la pénétration de fluides corrosifs entre la bague et le tube, en direction du filetage (3) et du volume clos (11) est empêchée. Le diamètre intérieur minimal $(D_1)$ de la bague est supérieure au diamètre intérieur $(D_2)$ du tube dans une partie courante ce qui permet le passage d'outils ou de calibres. La zone (15) de la bague qui dépasse l'extrémité du tube comporte des reliefs tels que (16, 17), formés respectivement sur ses parois extérieure et intérieure. Ces reliefs sont sensiblement parallèles à l'axe et permettent la prise d'outils pour le vissage ou le dévissage. L'épaisseur de la bague est déterminée de façon que celle-ci encaisse les chocs dus à la manutention du tube et protège efficacement la zone d'extrémité de celui-ci. Ainsi une surépaisseur (18) est réalisée au voisinage de la zone d'introduction (12) de la bague qui peut être soumise à des efforts et des chocs importants. Cette surépaisseur permet en particulier d'amortir les chocs perpendiculaires à l'axe X₁-X₂.

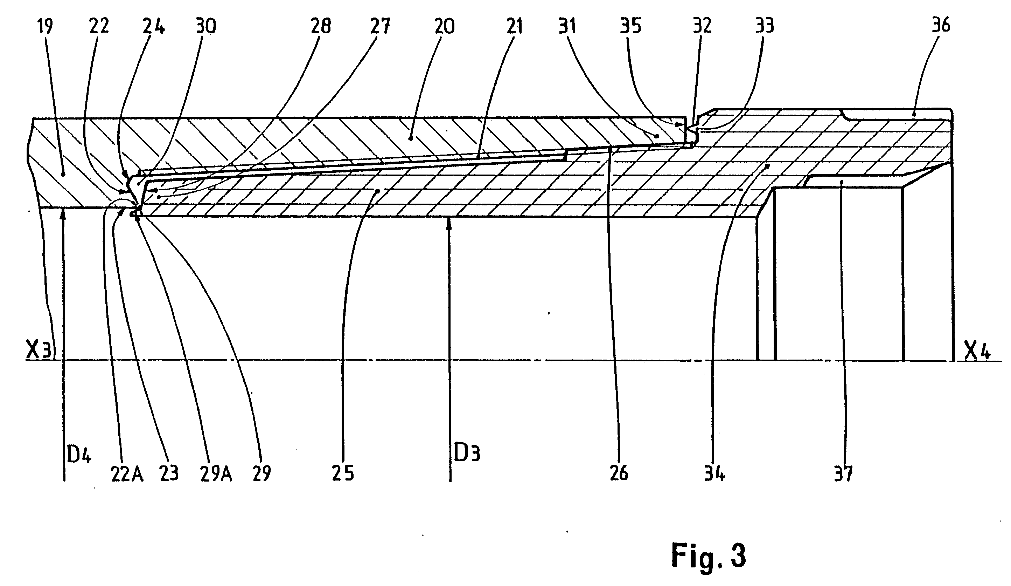

La figure 3 représente, en demi-coupe axiale le dispositif protecteur suivant l'invention monté à l'extrémité d'un tube métallique de révolution (19), d'axe (X₃-X₄), pour protéger sa zone de jonction femelle (20). Cette zone comprend un filetage tronconique intérieur (21) et une portée de joint (22) tronconique convexe formant butée. Ce tube peut aussi être un raccord ou manchon utilisé pour l'assemblage de tubes comportant des zones de jonction à filetage tronconique mâle.

La génératrice de la portée de joint (22) est inclinée de 15 à 25° par rapport à un plan perpendiculaire à l'axe (X₃-X₄). Cette portée de joint se raccorde à l'extrémité de la zone de filetage du tube par un chanfrein (24).

Le dispositif protecteur comprend une bague monobloc (25) en matière plastique, munie d'un filetage extérieur (26) comportant seulement quelques filets, qui est vissée à fond sur le filetage intérieur du tube jusqu'à serrage en butée. La zone de butée (27) de la bague comporte une face frontale (28) en regard de la portée de joint (22).

Comme dans le cas de la figure 1, la lèvre annulaire (29), orientée en direction de l'intérieur du tube (19), est engagée à l'intérieur du cercle formé par le bord intérieur (22A) de la portée de joint (22). Ce bord intérieur (22A) est à l'intersection de la portée (22) et de la paroi intérieure (23) du tube (19).

Lorsque la bague est vissée à fond, ce qui est le cas de la figure, ce bord intérieur (22A) est en appui contre la face frontale (28) dans la zone de raccordement entre le bord extérieur (29A) de la lèvre (29) et la partie de cette face frontale (28) qui se trouve en regard de la portée de joint (22). La génératrice de cette partie de la face frontale est inclinée par rapport à celle de la portée de joint de façon à réserver un volume annulaire clos (30) qui peut être rempli d'un fluide protecteur tel qu'une graisse. L'avancée de la lèvre (29) vers l'intérieur du tube (19) forme une sorte de labyrinthe ce qui limite les pertes de fluide protecteur, et donc les risques de pénétration de fluides corrosifs, dans le cas où une perte d'étanchéité se produit au niveau du contact entre le bord intérieur (22A) de la portée de joint (22) et la face frontale (28).

Pour compléter la protection, en particulier en ce qui concerne le filetage (21) du tube (20), un deuxième moyen d'étanchéité est disposé au delà de ce filetage, par rapport à la portée de joint (22), entre la bague et la zone d'extrémité (31) du tube. Ce deuxième moyen est une lèvre annulaire (32), rattachée à un décrochement (33) de la paroi arrière renforcée (34) de la bague (25) qui vient en appui élastique et étanche sur la face d'extrémité (35) du tube (20). Les dimensions de la bague (25) sont déterminées de façon que, lorsqu'elle est vissée à fond, des contacts étanches soient obtenus en même temps au niveau du premier et du deuxième moyen d'étanchéité. Le filetage (21) et le volume clos (30) sont ainsi protégés, de façon particulièrement efficace contre la pénétration de fluides corrosifs, tels que de l'eau de mer.

La zone annulaire renforcée (34) de la bague permet de protéger des chocs la zone d'extrémité (31) et la face (35) du tube. Cette zone renforcée (34) comporte des reliefs tels que (36, 37), disposés respectivement sur la paroi extérieure et sur la paroi intérieure, qui permettent la prise d'outils de vissage ou de dévissage. Le diamètre intérieur minimal (D₃) de la bague est peu inférieur au diamètre intérieur (D₄) du tube, dans une partie courante pour permettre le passage d'outils ou de calibres de types habituels.

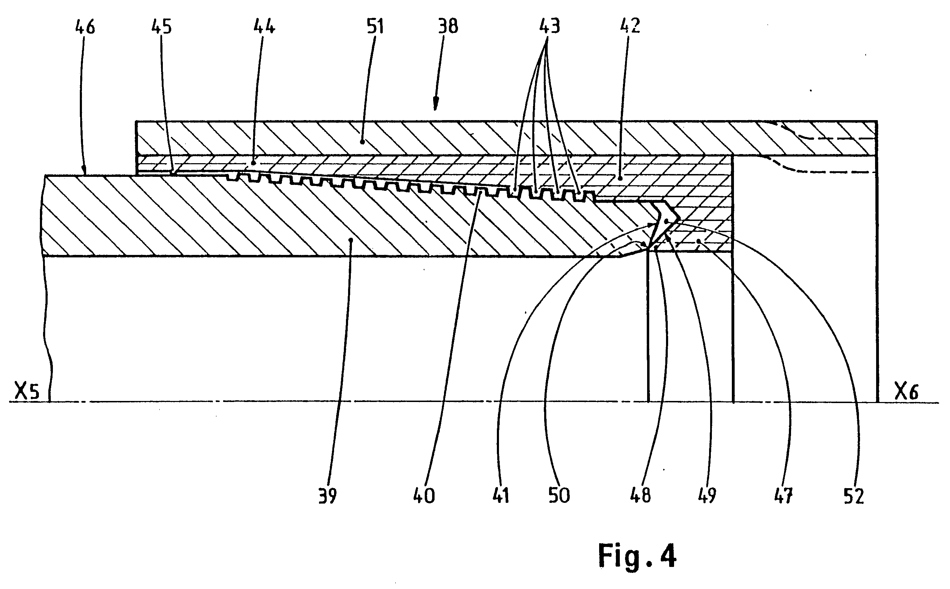

Les figures 4 à 6 représentent un mode de réalisation du dispositif suivant l'invention dans lequel la bague en matière plastique est revêtue d'une virole métallique pour renforcer sa tenue aux chocs.

La figure 4 représente, en demi-coupe axiale, un mode particulier de réalisation d'un dispositif protecteur (38) suivant l'invention réalisé autour de l'extrémité d'un tube métallique (39), d'axe X₅X₆, muni d'un filetage tronconique mâle (40) et, à l'extrémité, d'une portée de joint tronconique concave (41) formant butée. Ce dispositif comprend une bague en matière plastique (42) ne comportant que quelques filets (43).

Toute la zone d'entrée (44) de cette bague, sur plus de la moitié de la portée tronconique, est lisse. Cette bague est représentée vissée à fond sur le tube.

A l'extrémité avant de la zone d'entrée (44) de la bague (42) une petite lèvre annulaire (45) vient en appui sur la paroi cylindrique extérieure (46) du tube métallique (39). Elle constitue le deuxième moyen d'étanchéité. La bague (42) comporte, par ailleurs, une zone de butée (47) dont la lèvre (48) qui forme le bord intérieur de la face frontale (49) vient en appui contre le bord intérieur (50) de la portée de joint (41). Cette lèvre (48) constitue le premier moyen d'étanchéité. Un volume annulaire clos (52) est ainsi formé entre la portée (41) et la face frontale (49).

La bague (42) est revêtue sur sa paroi extérieure d'une virole métallique (51) qui dépasse l'extrémité de la bague au delà de l'extrémité du tube et la protège ainsi des chocs localisés. Cette virole peut, par exemple, être en acier doux. Il est avantageux de réaliser une liaison aussi solide que possible entre bague et virole. Pour cela on peut en particulier utiliser la virole comme l'une des parois d'un moule à l'intérieur duquel est effectuée la mise en forme de la bague en matière plastique. On peut de plus réaliser sur la paroi intérieure de la virole (51) des reliefs et/ou des creux auxquels s'accrochera la matière plastique. D'autres moyens de liaison sont également réalisables.

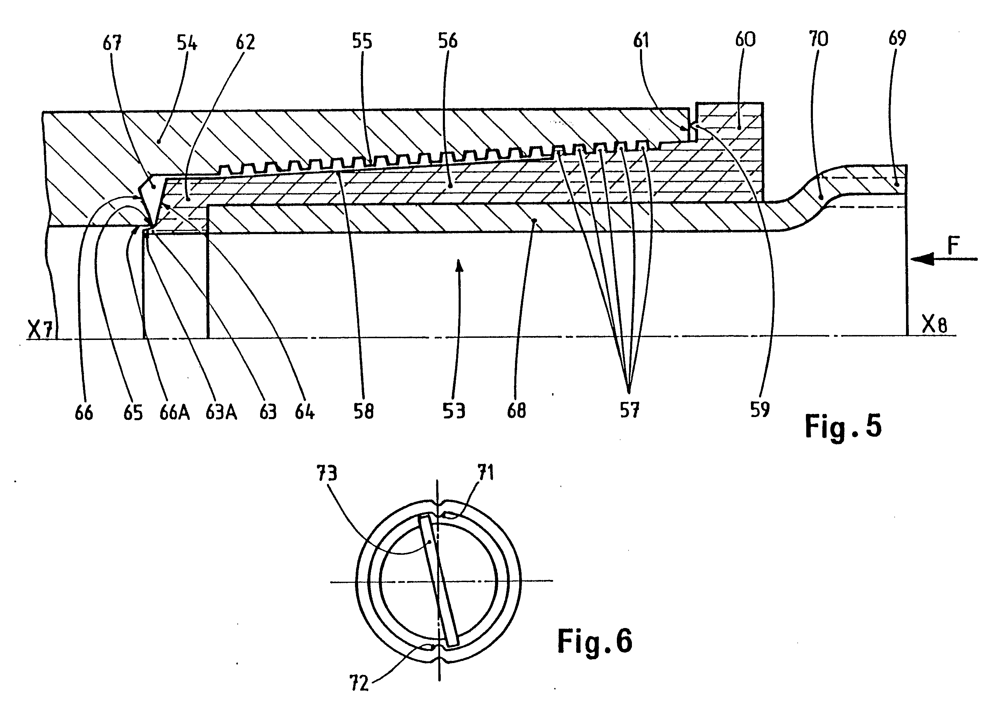

La figure 5 représente, en demi-coupe axiale, un dispositif protecteur (53) suivant l'invention réalisé à l'extrémité d'un tube métallique (54) d'axe de révolution $X_7X_8$, pourvu d'un filetage tronconique femelle (55). La bague en matière plastique (56) ne comporte que quelques filets (57), à l'extrémité de fort diamètre de sa zone d'engagement dans l'extrémité du tube (54). Une lèvre annulaire (59) formée sur le rebord arrière (60) de la bague est en appui sur le bord frontal (61) du tube (54).

A l'extrémité avant de la bague (56) est réalisée une zone de butée (62). Comme dans le cas de la figure 3 une lèvre annulaire (63), orientée en direction de l'intérieur du tube (54) est engagée à l'intérieur du cercle formé par le bord intérieur (65) de la portée de joint formant butée (66). Ce bord intérieur (65) est à l'intersection de la portée de joint (66) et de la paroi intérieure (66A) du tube (54). Lorsque la bague est vissée à fond, ce qui est le cas de la figure, le bord intérieur (65) est en appui contre la face frontale (64) dans la zone de raccordement entre le bord (63A) de la lèvre (63) et la partie de la face frontale (64) qui se trouve en regard de la portée de joint (66). La génératrice de cette face frontale est inclinée par rapport à celle de la portée de joint de façon à réserver un volume annulaire clos (67) qui peut être rempli d'un fluide protecteur tel qu'une graisse. L'avancée de la lèvre (63) vers l'intérieur du tube (54) forme une sorte de labyrinthe ce qui limite les pertes de fluide protecteur, et donc les risques de pénétration de fluides corrosifs, en particulier dans le cas où une perte d'étanchéité se produit au niveau du contact entre le bord intérieur (65) et la face frontale (64).

La lèvre (59) qui constitue le deuxième moyen d'étanchéité améliore encore la protection de l'ensemble de l'espace compris entre la bague (56) et le tube (54) ce qui évite en particulier la corrosion du filetage du tube par pénétration d'humidité.

Une virole (68) est solidarisée avec la bague (56) de la façon déjà décrite plus haut. La partie dépassante (69) de diamètre accru se rattache à la partie recouverte par la bague (56) par un congé (70). Celui-ci permet d'accommoder les chocs reçus de l'extérieur. Par ailleurs, comme le montre la figure 6, qui est une vue suivant F de la zone d'extrémité de la virole, deux bossages (71), (72), parallèles aux génératrices, formant des reliefs à l'intérieur, sont réalisés sur la partie dépassante (69) de la virole (68). Ils permettent d'introduire, dans cette partie dépassante, l'extrémité (73) vue en coupe d'un outil rotatif non représenté.

On peut ainsi monter et démonter de façon très rapide le dispositif protecteur (53), l'outil rotatif (73) entraînant en rotation la virole grâce aux bossages (71) et (72).

Pour certaines utilisations la bague (6, 25, 42) peut comporter, au voisinage de son extrémité arrière par exemple, une paroi circulaire pleine qui ferme de façon étanche le passage à travers cette bague et donc l'entrée du tube métallique sur lequel elle est vissée. Dans le cas où la bague est revêtue d'une virole métallique (51, 68) cette paroi circulaire pleine peut être solidaire de cette virole même. Cette paroi circulaire peut aussi être amovible.

On peut, comme le montre la figure 4, utiliser comme premier moyen d'étanchéité une lèvre qui, au lieu d'être engagée à l'intérieur du cercle formé par le bord intérieur de la portée de joint, se trouve en regard de cette portée au voisinage de ce bord intérieur. Un joint torique ou un autre type de joint peut être utilisé comme deuxième moyen d'étanchéité annulaire.

## Revendications

1. Dispositif protecteur monté sur l'extrémité d'un tube métallique avant son utilisation ledit tube comportant à une extrémité un filetage extérieur mâle se terminant par une portée située en amont du filetage lorsque l'on entre dans le tube, le filetage extérieur mâle et la portée de ce tube métallique étant destinés en service à s'engager dans des filetage intérieur femelle et portée correspondants prévus à l'extrémité d'un autre tube métallique afin de constituer une jonction vissée entre les deux tubes métalliques, les filetages et portées situés sur les deux tubes métalliques participant à l'étanchéité de la jonction vissée et les portées formant butée de vissage, comprenant une bague en matière plastique rigide qui est vissable sur le filetage extérieur mâle du tube métallique recouvrant ainsi ledit filetage, la bague (6, 42) comportant un filetage (7, 43) comprenant au moins quelques filets, au moyen desquels elle peut être vissée sur le filetage (3, 40) extérieur mâle du tube métallique (1, 39), la bague comportant par ailleurs une zone annulaire de butée (8, 47), pourvue d'une face frontale (9, 49) disposée de façon à se trouver en regard de la portée de joint formant butée (4, 41) du tube métallique, lorsque la bague est vissée à fond sur ce tube, le bord intérieur de cette face frontale comportant un premier moyen d'étanchéité annulaire (10, 48) qui coopère avec la portée de joint formant butée du tube métallique au voisinage de son bord intérieur (4A, 50) pour assurer l'étanchéité, le profil de cette face frontale étant tel qu'un volume annulaire clos (11, 52) soit compris entre la portée de joint formant butée et la face frontale en regard.

2. Dispositif protecteur monté sur l'extrémité d'un tube métallique avant son utilisation, ledit tube comportant à une extrémité un filetage intérieur femelle se terminant par une portée située en aval du filetage lorsque l'on entre dans le tube, le filetage intérieur femelle et la portée de ce tube métallique étant destinés en service à s'engager dans les filetage extérieur mâle et portée correspondants prévus à l'extrémité d'un autre tube métallique afin de constituer une jonction vissée entre les deux tubes métalliques, les filetages et portées situés sur les deux tubes métalliques participant à l'étanchéité de la jonction vissée et les portées formant butée de vissage, comprenant une bague en matière plastique rigide qui est vissable dans le filetage intérieur femelle du tube métallique recouvrant ainsi ledit filetage, la bague (25, 56) comportant un filetage (26, 57) comprenant au moins quelques filets, au moyen desquels elle peut être vissée sur le filetage (21, 55) intérieur femelle du tube métallique (19, 54) la bague comportant par ailleurs une zone annulaire de butée (27, 62), pourvue d'une face frontale (28, 64) disposée de façon à se trouver en regard de la portée de joint formant butée (22, 66) du tube métallique, lorsque la bague est vissée à fond sur ce tube, le bord intérieur de cette face frontale comportant un premier moyen d'étanchéité annulaire (29, 63) qui coopère avec la portée de joint formant butée du tube métallique au voisinage de son bord intérieur (22A, 65) pour assurer l'étanchéité, le profil de cette face frontale étant tel qu'un volume annulaire clos (30, 67) soit compris entre la portée de joint formant butée et la face frontale en regard.

3. Dispositif suivant l'une des revendications 1 ou 2 caractérisé en ce que le premier moyen d'étanchéité annulaire (10, 29, 48, 63) est une lèvre orientée en direction de l'intérieur du tube qui, lorsque la bague est vissée à fond, est engagée à l'intérieur du cercle formé par le bord intérieur (4A, 22A, 50, 65) de la portée de joint formant butée (4, 22, 41, 66) de façon que son bord intérieur (10A, 29A, 63A) soit en regard de la paroi intérieure (4B, 23, 66A) du tube dans sa zone de raccordement avec ce bord intérieur.

4. Dispositif suivant revendication 3, caractérisé en ce que le bord intérieur (4A, 22A, 65) est en contact avec la face frontale (9, 28, 64) de la zone de butée de la bague dans la zone de raccordement entre le bord intérieur (10A, 29A, 63A) de la lèvre (10, 29, 63) et la partie de la face frontale qui se trouve en regard de la portée de joint (4, 22, 66).

5. Dispositif suivant l'une des revendications 1 à 4, caractérisé en ce que la bague (6, 25, 42, 56) comporte un deuxième moyen d'étanchéité annulaire (14, 32, 45, 59) qui, lorsque la bague est serrée est en appui contre le tube métallique au voisinage de l'une des extrémités de son filetage, la portée de joint formant butée se trouvant au voisinage de l'autre extrémité de ce filetage.

6. Dispositif suivant l'une des revendications 1 à 5, caractérisé en ce que le volume annulaire clos (11, 30, 52, 67) est rempli, au moins en partie d'un fluide protecteur tel qu'une graisse.

7. Dispositif suivant l'une des revendications 1 à 6, caractérisé en ce que la bague (42, 56) est revêtue sur la majeure partie de sa surface, du côté non fileté, d'une virole métallique (51, 68) qui est solidarisée avec elle.

8. Dispositif suivant l'une des revendications 1 à 7, caractérisé en ce que l'extrémité arrière de la bague et/ou de la virole métallique dépasse l'extrémité du tube métallique.

9. Dispositif suivant l'une des revendications 1 à 8, caractérisé en ce que des moyens de prise tels que des reliefs (16, 17, 36, 37, 71, 72) sont formés à l'extrémité arrière de la bague ou de la virole métallique pour permettre la prise d'un outil de vissage ou dévissage.

10. Dispositif suivant l'une des revendications 1 à 9, caractérisé en ce que un fond circulaire étanche, fixe ou amovible, obture le passage à travers la bague.

11. Dispositif suivant l'une des revendications 1 à 10, caractérisé en ce que la bague est en polyuréthane ou en polyamide ou en polyéthylène.

12. Dispositif suivant l'une des revendications 1 à 11, caractérisé en ce que le filetage extérieur mâle et le filetage intérieur femelle sont tronconiques.

**Claims**

1. A protective device mounted on the end of a metal tube prior to use thereof, said tube having, at one end, an external male threading terminating with a bearing surface located upstream of the threading when entering the tube, the external male threading and the bearing surface of this metal tube being intended, in service, to engage in corresponding internal female threading and bearing surface provided at the end of another metal tube so as to form a screwed joint between the two metal tubes, the threadings and bearing surfaces located on the two metal tubes contributing to the seal of the screwed joint and the bearing surfaces forming a screw abutment, comprising a ring of rigid elastics material which can be screwed on the external male threading of the metal tube thus covering said threading, the ring (6, 42) having a threading (7, 43) comprising at least some threads, by means of which it can be screwed onto the external male threading (3, 40) of the metal tube (1, 39), the ring also having an annular abutment zone (8, 47) provided with a front face (9, 49) arranged so as to face the joining bearing surface forming an abutment (4, 41) of the metal tube when the ring is screwed home on this tube, the internal edge of this front face having a first annular scaling means (10, 48) which co-operates with the joining bearing surface forming an abutment of the metal tube in the vicinity of its internal edge (4A, 50) so as to provide the seal, the profile of this front face being such that a closed annular volume (11, 52) is contained between the joining bearing surface forming an abutment and the opposing front face.

2. A protective device mounted on the end of a metal tube prior to use thereof, said tube having, at one end, an internal female threading terminating with a bearing surface located downstream of the threading when entering the tube, the internal female threading and the bearing surface of this metal tube being intended, in service, to engage in the corresponding external male threading and bearing surface provided at the end of another metal tube in order to form a screwed joint between the two metal tubes, the threadings and bearing surfaces located on the two metal tubes

contributing to the seal of the screwed joint and the bearing surfaces forming a screwing abutment, comprising a ring of rigid plastics material which can be screwed on the internal female threading of the metal tube thus covering said threading, the ring (25, 56) having a threading (26, 57) comprising at least some threads, by means of which it can be screwed on the internal female threading (21, 55) of the metal tube (19, 54), the ring also having an annular abutment zone (27, 62) provided with a front face (28, 64) arranged so as to face the joining bearing surface forming an abutment (22, 66) of the metal tube when the ring is screwed home on this tube, the internal edge of this front face comprising a first annular sealing means (29, 63) which co-operates with the joining bearing surface forming an abutment of the metal tube in the vicinity of its internal edge (22A, 65) so as to provide the seal, the profile of this front face being such that a closed annular volume (30, 67) is contained between the joining bearing surface forming an abutment and the opposing front face.

3. A device according to one of claims 1 or 2, characterised in that the first annular sealing means (10, 29, 48, 63) is a lip orientated toward the interior of the tube which, when the ring is screwed home, engages inside the circle formed by the internal edge (4A, 22A, 50, 65) of the joining bearing surface forming an abutment (4, 22, 41, 66) so that its internal edge (10A, 29A, 63A) faces the internal wall (4B, 23, 66A) of the tube in the zone where it is connected to this internal edge.

4. A device according to claim 3, characterised in that the internal edge (4A, 22A, 65) is in contact with the front face (9, 28, 64) of the abutment zone of the ring in the zone of connection between the internal edge (10A, 29A, 63A) of the lip (10, 29, 63) and the part of the front face opposing the joining bearing surface (4, 22, 66).

5. A device according to one of claims 1 to 4, characterised in that the ring (6, 25, 42, 56) has a second annular sealing means (14, 32, 45, 59) which, when the ring is gripped, rests against the metal tube in the vicinity of one of the ends of its threading, the joining bearing surface forming an abutment being located in the vicinity of the other end of this threading.

6. A device according to one of claims 1 to 5, characterised in that the closed annular volume (11, 30, 52, 67) is filled, at least in part, by a protective fluid such as a lubricant.

7. A device according to one of claims 1 to 6, characterised in that the ring (42, 56) is covered over the majority of its surface, on the unthreaded side, with a metal hoop (51, 68) which is integral therewith.

8. A device according to one of claims 1 to 7, characterised in that the rear end of the ring and/or of the metal hoop projects beyond the end of the metal tube.

9. A device according to one of claims 1 to 8, characterised in that holding means such as reliefs (16, 17, 36, 37, 71, 72) are formed at the rear end of the ring or of the metal hoop to allow a screwing or unscrewing tool to be held.

10. A device according to one of claims 1 to 9, characterised in that a sealed, fixed or detachable circular base blocks the passage through the ring.

11. A device according to one of claims 1 to 10, characterised in that the ring is of polyurethane or of polyamide or of polyethylene.

12. A device according to one of claims 1 to 11, characterised in that the external male threading and the internal female threading are truncated cone shaped.

**Patentansprüche**

1. Schutzvorrichtung, die auf dem Ende eines metallischen Rohres vor seiner Verwendung montiert ist, welches Rohr an einem Ende ein Außengewinde aufweist, das durch einen Anschlag endet, der stromauf des Gewindes liegt, wenn man in das Rohr eintritt, wobei das Außengewinde und der Anschlag dieses metallischen Rohres im Betrieb dazu bestimmt sind, in Eingriff im Innengewinde und mit einem Anschlag zu kommen, die entsprechend am Ende eines anderen metallischen Rohres vorgesehen sind, um eine verschraubte Verbindung zwischen den beiden metallischen Rohren zu bilden, wobei die auf den beiden metallischen Rohren befindlichen Gewinde und Anschläge an der Abdichtung der verschraubten Verbindung teilnehmen und die Anschläge die Verschraubungsgrenze bilden und einen Ring aus steifem Kunststoff aufweisen, der auf das Außengewinde des metallischen Rohres schraubbar ist und so das Gewinde bedeckt, welcher Ring (6, 42) ein Gewinde (7, 43) mit wenigstens einigen Gewindegängen aufweist, mittels deren er auf das Außengewinde (3, 40) des metallischen Rohres (1, 39) geschraubt werden kann, wobei der Ring außerdem eine ringförmige Anschlagzone (8, 47) aufweist, die mit einer Stirnfläche (9, 49) versehen ist, die derart angeordnet ist, um sich auf Höhe des die Verschraubungsgrenze (4, 41) des metallischen Rohres bildenden Verbindungsanschlags zu befinden, wenn der Ring am Boden auf das Rohr geschraubt wird, wobei der innere Rand dieser Stirnfläche ein erstes ringförmiges Dichtungsmittel (10, 48) aufweist, das mit dem die Verschraubungsgrenze des metallischen Rohres bildenden Verbindungsanschlags in der Nähe seines inneren Randes (4A, 50) zusammenwirkt, um die Abdichtung zu sichern, und das Profil dieser Stirnfläche derart ist, daß ein geschlossenes Ringvolumen (11, 52) zwischen dem die Verschraubungsgrenze bildenden Verbindungsanschlag und der zugewandten Stirnfläche vorliegt.

2. Schutzvorrichtung, die auf dem Ende eines metallischen Rohres vor seiner Verwendung montiert ist, welches Rohr aus einem Ende ein Innengewinde aufweist, das durch einen Anschlag endet, der stromab des Gewindes liegt, wenn man in das Rohr eintritt, wobei das Innengewinde und der Anschlag dieses metallischen Rohres im Betrieb dazu bestimmt sind, in Eingriff mit dem Außengewinde und einem Anschlag zu kommen, die entsprechend am Ende eines anderen metallischen Rohres vorgesehen sind, um eine verschraubte Verbindung zwischen den beiden metallischen Rohren zu bilden, wobei die auf den beiden metallischen Rohren befindlichen Gewinde und Anschläge an der Abdichtung der verschraubten Verbindung teilnehmen und die Anschläge die Verschraubungsgrenze bilden und einen Ring aus steifem Kunststoff aufweisen, der in das Innengewinde des metallischen Rohres schraubbar ist und so das Gewinde bedeckt, welcher Ring (25, 56) ein Gewinde (26, 57) mit wenigstens einigen Gewindegängen aufweist, mittels deren er in das Innengewinde (21, 55) des metallischen Rohres (19, 54) geschraubt werden kann, wobei der Ring außerdem eine ringförmige Anschlagzone (27, 62) aufweist, die mit einer Stirnfläche (28, 64) versehen ist, die derart angeordnet ist, um sich auf Höhe des die Verschraubungsgrenze (22, 66) des metallischen Rohres bildenden Verbindungsanschlags zu befinden, wenn der Ring am Boden auf das Rohr geschraubt wird, wobei der innere Rand dieser Stirnfläche ein erstes ringförmiges Dichtungsmittel (29, 63) aufweist, das mit dem die Verschraubungsgrenze des metallischen Rohres bildenden Verbindungsanschlag in der Nähe seines inneren Randes (22A, 65) zusammenwirkt, um die Abdichtung zu sichern, und das Profil dieser Stirnfläche derart ist, daß ein geschlossenes Ringvolumen (30, 67) zwischen dem die Verschraubungsgrenze bildenden Verbindungsanschlag und der zugewandten Stirnfläche vorliegt.

3. Vorrichtung nach einem der Ansprüche 1 oder 2, dadurch gekennzeichnet, daß das erste ringförmige Dichtungsmittel (10, 29, 48, 63) eine in Richtung des Inneren des Rohres gerichtete Lippe ist, die, wenn der Ring zum Boden geschraubt wird, in das Innere des Kreises eingreift, der durch den inneren Rand (4A, 22A, 50, 65) des die Verschraubungsgrenze bildenden Verbindungsanschlags (4, 22, 41, 66) derart gebildet ist, daß ihr innerer Rand (10A, 29A, 63A) auf Höhe der Innenwand (4B, 23, 66A) des Rohres in dessen Verbindungszone mit diesem inneren Rand ist.

4. Vorrichtung nach Anspruch 3, dadurch gekennzeichnet, daß der innere Rand (4A, 22A, 65) im Kontakt mit der Stirnfläche (9, 28, 64) der Anschlagzone des Ringes in der Verbindungszone zwischen dem inneren Rand (10A, 29A, 63A) der Lippe (10, 29, 63) und dem Teil der Stirnfläche ist, der sich auf Höhe des Verbindungsanschlags (4, 22, 66) befindet.

5. Vorrichtung nach einem der Ansprüche 1 bis 4, dadurch gekennzeichnet, daß der Ring (6, 25, 42, 56) ein zweites ringförmiges Dichtungsmittel (14, 32, 45, 59) aufweist, das, wenn der Ring festgezogen ist, in Abstützung am metallischen Rohr in der Nähe des einen der Enden seines Gewindes ist, wobei sich der die Verschraubungsgrenze bildende Verbindungsanschlag in der Nähe des anderen Endes dieses Gewindes befindet.

6. Vorrichtung nach einem der Ansprüche 1 bis 5, dadurch gekennzeichnet, daß das geschlossene Ringvolumen (11, 30, 52, 67) wenigstens teilweise mit einem Schutzfluid, wie z. B. einem Fett, gefüllt ist.

7. Vorrichtung nach einem der Ansprüche 1 bis 6, dadurch gekennzeichnet, daß der Ring (42, 56) auf dem größeren Teil seiner Oberfläche an der gewindelosen Seite mit einem metallischen Mantelring (51, 68) bedeckt ist, der mit ihm fest verbunden ist.

8. Vorrichtung nach einem der Ansprüche 1 bis 7, dadurch gekennzeichnet, daß das hintere Ende des Ringes und/oder des metallischen Mantelringes über das Ende des metallischen Rohres vorragt.

9. Vorrichtung nach einem der Ansprüche 1 bis 8, dadurch gekennzeichnet, daß Eingriffsmittel, wie z. B. Reliefs (16, 17, 36, 37, 71, 72) am Hinterende des Ringes oder des metallischen Mantelringes gebildet sind, um den Eingriff eines Schraub- und Abschraubwerkzeugs zu ermöglichen.

10. Vorrichtung nach einem der Ansprüche 1 bis 9, dadurch gekennzeichnet, daß ein fester oder lösbarer, kreisförmiger dichter Boden den Durchlaß durch den Ring verschließt.

11. Vorrichtung nach einem der Ansprüche 1 bis 10, dadurch gekennzeichnet, daß der Ring aus Polyurethan oder aus Polyamid oder aus Polyethylen ist.

12. Vorrichtung nach einem der Ansprüche 1 bis 11, dadurch gekennzeichnet, daß das Außengewinde und das Innengewinde kegelstumpfförmig sind.

Fig.1

Fig.2

Fig. 3

EP 0 148 807 B1

Fig. 4

EP 0 148 807 B1

Fig.5

Fig.6

EP 0 148 807 B1